# EUROPEAN PATENT SPECIFICATION

(11) **EP 1 731 355 B1**
(45) Date of publication and mention of the grant of the patent: **05.03.2008**
(21) Application number: 06076063.4
(22) Date of filing: 17.05.2006
(51) Int. Cl.: B60N 2/28

(54) **A chassis as well as an assembly comprising such a chassis**
Ein Rahmen und ein Aufbau mit solch einem Rahmen
Un chassis ainsi qu'un ensemble comprenant un tel chassis

(30) Priority: 06.06.2005 NL 1029196
(43) Date of publication of application: 13.12.2006
(73) Proprietor: Maxi Miliaan B.V., 5704 RD Helmond (NL)
(72) Inventor: van Montfort, Donald Hendrikus, 6093 EL Heythuisen (NL); Dikhoff, Hans Constant, 5502 PB Veldhoven (NL); van Geer, Rene Johan, 2281 AJ Rijswijk (NL)
(74) Representative: Veldman-Dijkers, Cornelia G. C.

(56) References cited:
- EP-A- 1 369 295
- FR-A- 2 782 483
- US-B1- 6 375 260

## Description

The invention relates to a chassis suitable for attaching a child vehicle seat to a vehicle seat, in which the chassis can be detachably attached to the vehicle seat, whilst the child vehicle seat can be detachably connected to the chassis, which chassis comprises a frame, a slide which is movable under spring force with respect to the frame, as well as a number of pins which are movable against spring force with respect to the slide, which pins can be moved against spring force from a first position to a second position by positioning the child vehicle seat on the chassis, after which the slide can be moved in a locking direction under spring force from a starting position to a locking position in which it engages the child vehicle seat.

The invention further relates to an assembly comprising such a chassis, as well as to a child vehicle seat.

Such a chassis, which is known from EP-A-1 369 295 to the Applicant, is attached to a vehicle seat, after which a user places a child vehicle seat on the chassis. The child vehicle seat can be removed from the chassis, so that the child vehicle seat can also be used as a child seat for the child outside the vehicle.

The connections both between the chassis and the vehicle seat and between the child vehicle seat and the chassis must be such that the child vehicle seat will remain firmly attached to the vehicle seat in case of a collision of the vehicle.

The object of the invention is to provide a chassis by means of which an improved connection between the child vehicle seat and the chassis is achieved.

This object is achieved with the chassis according to the invention in that the slide is provided with a locking element that is movably connected to the slide, which locking element can be moved under spring force from a released position, in which the slide can be moved with respect to the frame, to a locking position in which the slide, in the locked position thereof, is locked against movement in a direction opposed to the locking direction, and vice versa.

In this way the slide cannot be undesirably move in a direction opposed to the locking direction in case of a collision, which would result in a child vehicle seat becoming detached. Since the slide is locked against movement with respect to the frame, such movement is excluded, so that a robust connection between the child vehicle seat and the chassis is ensured.

One embodiment of the chassis according to the invention is characterized in that the locking element is pivotally connected to the slide, with the locking element having an edge which, seen in the direction of movement, is positioned in front of an edge of the frame in the locking position.

The edge of the frame locks the locking element against movement in a simple yet effective manner.

Another embodiment of the chassis according to the invention is characterized in that the chassis is provided with at least one indicating element, by means of which it can be indicated at the slide is in the locked position and that the locking element is in the locking position.

In this way a clear indication is provided to the user that the child vehicle seat is firmly locked in position with respect to the chassis. When the slide is in the locked position but the locking element is not in the locking position yet, this will be clearly visible to the user, so that the user can take measures to connect the child vehicle seat correctly to the chassis yet or to have the chassis inspected.

Yet another embodiment of the chassis according to the invention is characterized in that the chassis is provided with a cover element that can be moved by means of the locking element, which cover element can move against spring force upon movement of the locking element to the locking position, from a position in which it covers the indicating element to a position in which it releases the indicating element, and vice versa.

The indicating element will not be visible as long as the locking element is not in the locking position. The indicating element will not become visible until the cover element has been moved against said spring force, thereby indicating to the user that the child vehicle seat is firmly secured to the chassis.

Yet another embodiment of the chassis according to the invention is characterized in that indicating elements are present on either side of the frame, which indicating elements can be simultaneously covered or released by means of cover elements.

In this way at least one indicating element will be visible to the user at all times.

Another embodiment of the chassis according to the invention is characterized in that the slide can be moved in the locking direction when all the pins are in the second position.

In this way a correct locking engagement between the child vehicle seat and the frame is ensured.

Yet another embodiment of the chassis according to the invention is characterized in that the chassis can be detachably secured to brackets present in the vehicle by means of hooks.

Such brackets and hooks that mate therewith form a so-called iso-fix system, by means of which a firm connection between a chassis and the vehicle can be realised.

The invention will now be explained in more detail with reference to drawings, in which:
Figure 1 is a perspective view of a chassis according to the invention;
Figure 2 is a cutaway view of the chassis of figure 1, showing the chassis in a locked position and in an unlocked position;
Figure 3 shows the chassis of figure 2 at the time of connecting a child vehicle seat to the chassis;
Figure 4 shows the chassis of figure 2, with the slide in the locked position and the locking element in the locking position;
Figure 5 shows the chassis of figure 2 at the time of unlocking the locking element; and
Figure 6 shows the chassis of figure 1 at the time of unlocking the slide.

Like parts are indicated by the same numerals in the figures.

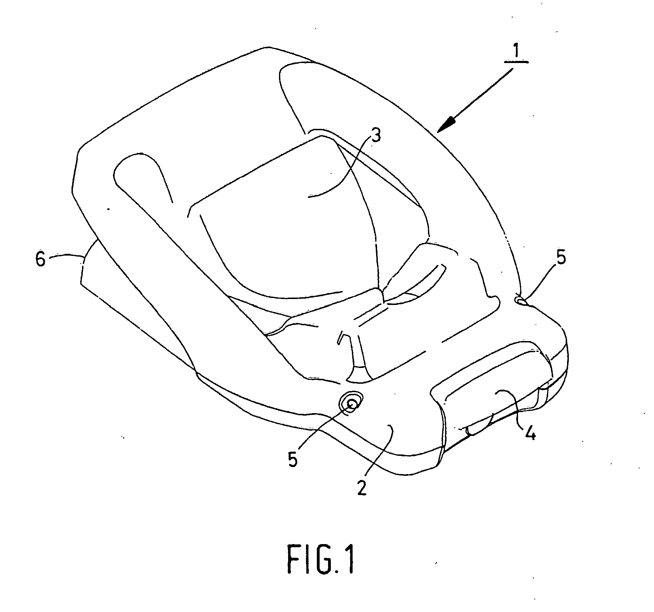

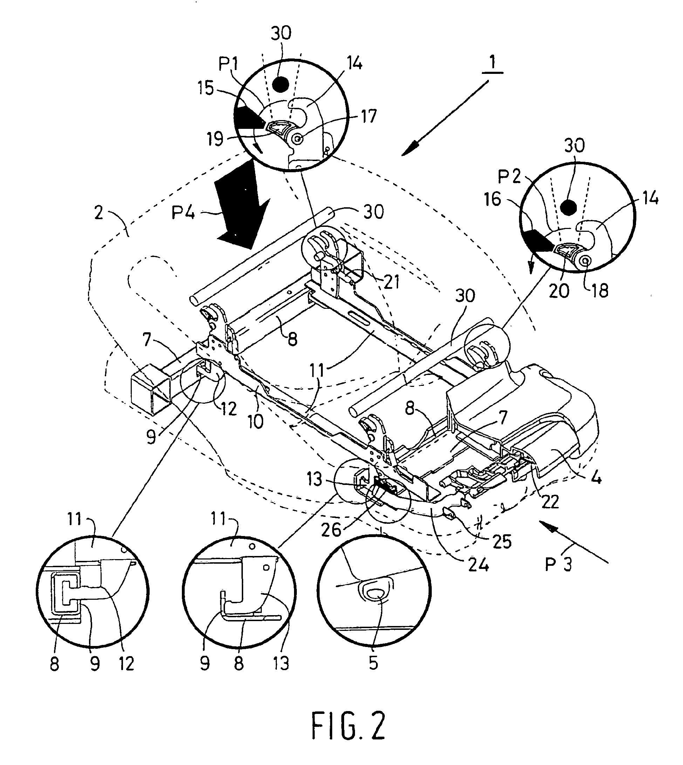

Figure 1 is a schematic representation of a chassis 1 according to the invention, which comprises a frame 2 of plastic material. The plastic frame 2 is provided with a recess 3, in which a child vehicle seat (not shown) can be positioned. The chassis 1 is provided with a handle 4 on a front side, by means of which a slide 3 positioned in the frame 2 (see figures 2-6) can be moved. Openings 5 are provided on both sides of the frame 2, through which openings indicating elements present in the frame 2 are visible. The chassis 1 is provided with parts of, for example, a so-called iso-fix attachment at a rear side 6. Such attachments are known per se and will not be explained in more detail herein, therefore.

Figure 2 shows the chassis 1 of figure 1 in cutaway view, including a few larger-scale details thereof. A metal frame 7 is positioned within the plastic frame 2, which metal frame is rigidly connected to the plastic frame 2. The metal frame 7 comprises two horizontal members 8 extending parallel to each other, which members are provided with recesses 9. The chassis 1 further comprises a slide 10, which is provided with horizontal members 11 extending transversely to the horizontal members 8. The horizontal members 11 comprise projections 12, 13 that mate with the recesses 9. On the sides remote from the projections 12 and 13, the horizontal members 11 comprise hooks that are positioned opposite an edge 15, 16 of the plastic frame 2. The hooks 14 are provided with pins 19, 20 that are pivotable about pivot pins 17, 18. The pins 19, 20 can pivot against the spring force of a spring 21 in the directions indicated by the arrows P1, P2. In the position that is shown in figure 2, ends of the pins 19, 20 abut against edges 15, 16 of the plastic frame 2. In this way movement of the slide in the locking direction indicated by the arrow P3 is prevented in a simple manner. The slide 10 is provided with a handle 4 at the front side, as well as with a locking element 22 positioned below the handle 4, which is pivotally connected to the slide 10 about a pivot pin 23. The chassis 1 further comprises two cover elements 24, which are pivotally connected to the frame 2 about pivot pins 25. The cover elements 24 are disposed on either side of the frame 2, each cover element 24 being positioned in front of one of the openings 5 in the position that is shown in figure 2, so that a cover element 24 is visible through each opening 5. Preferably, the cover element 24 has a striking warning colour, such as red. Indicating elements 26 are provided in the frame 2 on a side of the cover element 24 remote from the opening 5. The indicating element preferably has a striking colour, such as green. As already indicated above, the cover element is visible through the opening 5 in the situation that is shown in figure 2, and the indicating element 26 is hidden from view by the cover element 24.

A child vehicle seat that is to be connected to the chassis 1 comprises two rods 30 extending parallel to the horizontal members 8, which rods are spaced apart by a distance that corresponds to the distance between the pivot pins 17, 18.

The operation of the chassis 1 will now be explained in more detail with reference to figures 2-6.

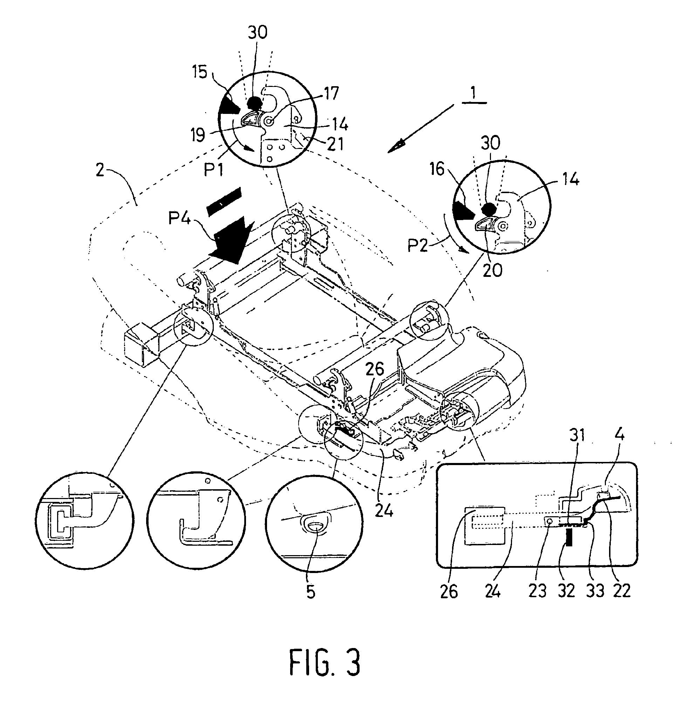

A user secures the chassis 1 to the vehicle, using means that are known per se, such as iso-fix attachments. Then the user will position the rods 30 of the child vehicle seat opposite the pins 19, 20 of the chassis 1, after which the user will move the child vehicle seat and thus the rods 30 in the direction indicated by the arrow P4. As figure 3 shows, the movement of the rods 30 in the direction indicated by the arrow P4 causes the pins 19, 20 to pivot in the directions indicated by the arrows P1, P2 about the pivot pins 17, 18 against spring force. Since the pins 19, 20 have not been moved completely past the edges 15, 16 view of the plastic frame, movement of the slide 10 in the locking direction indicated by the arrow P3 is not possible yet. The locking element 22 is in the position that is shown in figure 3 at the time of connecting the child vehicle seat to the chassis 1, in which position the locking element 22 abuts against the handle 4 with an end remote from the pivot 23 and to a (preferably metal) edge 32 of the frame 7 with a surface that is located near the pivot 23. As figure 3 clearly shows, the locking element 22 comprises an edge 33 extending transversely to the surface 31 and parallel to the edge 32. In the position that is shown in figure 3, the cover elements 24 are positioned in front of the indicating elements 26 and the cover elements are visible through the openings 5, thereby indicating to a user that the child vehicle seat is not correctly connected to the chassis 1 yet.

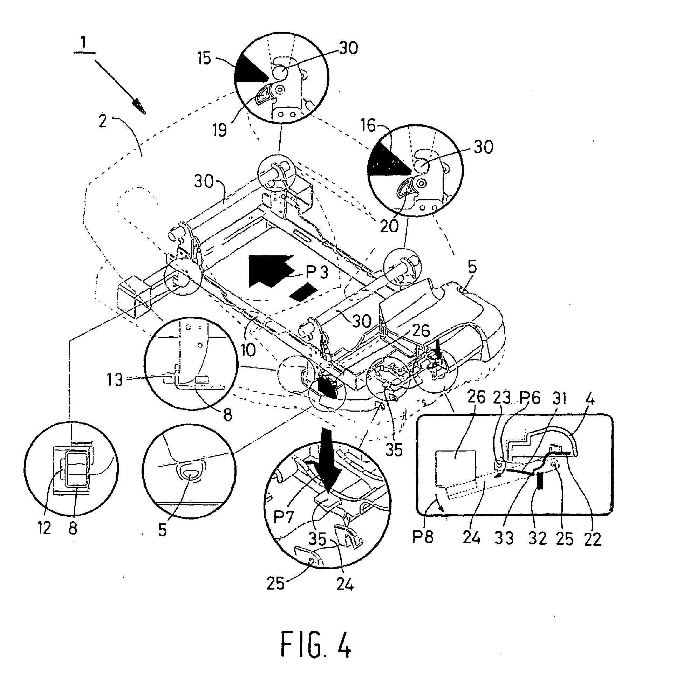

By moving the pins 30 even further in the direction indicated by the arrow P4, the pins 19, 20 are pivoted even further in the directions indicated by the arrows P1, P2, until the pins 19, 20 occupy the position that is shown in figure 4. In this position, the pins 19, 20 are positioned below the edges 15, 16 of the frame 2, so that movement of the slide 10 in the direction indicated by the arrow P3 under spring force is possible. Said spring force is provided by a biassed spring which, in the situation that is shown in figure 2, is mounted between the slide 10 and the frame 2. By moving the slide 10 in the locking direction indicated by the arrow P3, the hooks 14 are firmly positioned round the rods 30, as a result of which an adequate locking engagement between the child vehicle seat and the chassis 1 is obtained. Simultaneously with the movement of the slide in the direction indicated by the arrow P3, the flat surface 31 of the locking element 22 is moved over the edge 32 in the direction indicated by the arrow P3, until the edge 33 is positioned in front of the edge 32, seen in the locking direction indicated by the arrow P3. Once the locking element 22 has taken up this position, the locking element 22 is pivoted in the direction indicated by the arrow P6 about the pivot 23 under the spring force of a spring (not shown), causing the edge 33 to abut against the edge 32 of the frame.

The locking element 22 is provided with two pawls 35, which are positioned opposite ends of the cover elements 24. Pivoting of the locking element 22 causes the pawls 35 to move in the direction indicated by the arrow P7, as a result of which the cover elements 24 are pivoted in the direction indicated by the arrow P8 about the pivot 25 against the spring force of a spring (not shown). As a result, the cover element 24 is moved out of the field of vision through the openings 5 in the plastic frame 2, with the indicating elements 26 becoming visible through the openings 5. This is an indication to the user that the child vehicle seat is firmly connected to the chassis 1, with the rods 30 being locked in position by means of the slide 10 and movement in a locking direction indicated by the arrow P3 being blocked by the locking element 22 and in particular by the edge 33 that is positioned opposite the edge 32.

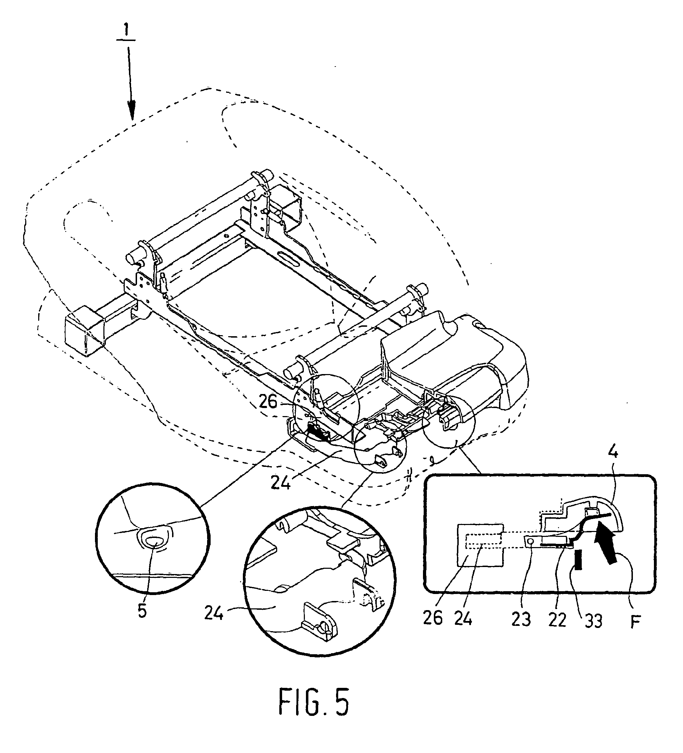

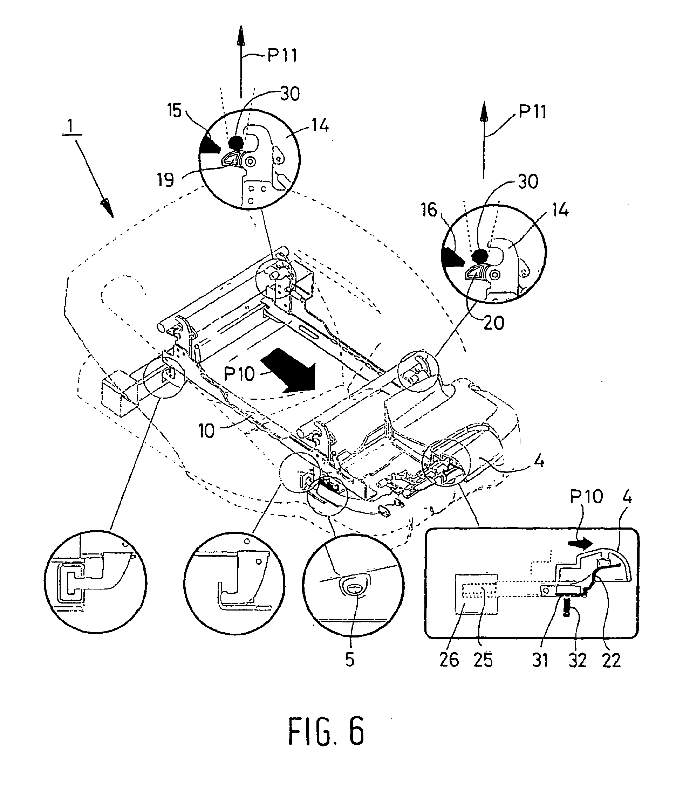

In case of a collision, when a relatively large force is exerted on the child vehicle seat in the opposite direction of the arrow P3, said force will press the edge 33 against the edge 32, as a result of which the slide 10 cannot be moved in the opposite direction of the arrow P3, thus ensuring that the rods 30 of the child vehicle seat will remain firmly connected to the chassis 1. When the child vehicle seat is to be removed from the chassis 1, the user will take hold of the handle 4 from a bottom side, as a result of which a force F will automatically be exerted on the locking element 22, causing the locking element 22 to be pivoted in the opposite direction of the arrow P6 about the pivot 23, to the position that is shown in figure 5. The pawls 35 are thereby moved in the opposite direction of the arrow P7 under spring force, causing the cover elements 24 to pivot in the opposite direction of the arrow P8 under spring force and take up the position that is shown in figure 5, in which position the cover elements 24 cover the indicating elements 26 again. This indicates to the user that there is no optimum connection between the child vehicle seat and the chassis 1. Subsequently, the user will pull the handle 4, and thus the slide 10 that is connected thereto, in an unlocking direction indicated by the arrow P10, opposite the direction indicated by the arrow P3, to the situation that is shown in figure 6. The flat surface 31 of the locking element 22 is thus positioned on the edge 32 again, as a result of which the locking element 22 will retain the position that is shown in figure 6. The hooks 14 are moved away from the edges 15, 16, thereby enabling a user to lift the child vehicle seat and the rods 30 that are connected thereto from the chassis **1** in the direction indicated by the arrow P11. Once the child vehicle seat has been removed, the pins 19,20 will be pivoted in the opposite direction of the arrows P1, P2, to the starting position that is shown in figure 2, under the influence of the spring force.

It is also possible, of course, to use a different locking element, by means of which movement of the slide 10 in the direction indicated by the arrow P10 after the child vehicle seat has been locked in position on the chassis 1 is prevented in an effective manner.

It is also possible to use a single indicating element instead of a separate cover element and a separate indicating element, which indicating element will in that case preferably have a red and a green surface, which green and which red surface will be visible in dependence on whether the locking element is locked in position or not.

It is also possible to provide the child seat to be placed on the chassis with other means, for example pins, for operating the pins 19, 20 of the chassis.

## Claims

1. A chassis (1) suitable for attaching a child vehicle seat to a vehicle seat, in which the chassis (1) can be detachably attached to the vehicle seat, whilst the child vehicle seat can be detachably connected to the chassis (1), which chassis (1) comprises a frame (2), a slide (10) which is movable under spring (21) force with respect to the frame (2), as well as a number of pins (19, 20) which are movable against spring force with respect to the slide (10), which pins (19, 20) can be moved against spring force from a first position to a second position by positioning the child vehicle seat on the chassis (1), after which the slide (10) can be moved in a locking direction under spring force from a starting position to a locking position in which it engages the child vehicle seat, **characterized in that** the slide (10) is provided with a locking element (22) that is movably connected to the slide (10), which locking element (22) can be moved under spring force from a released position, in which the slide (10) can be moved with respect to the frame (2), to a locking position in which the slide (10), in the locked position thereof, is locked against movement in a direction opposed to the locking direction, and vice versa.

2. A chassis (1) according to claim 1, **characterized in that** the locking element (22) is pivotally connected to the slide (10), with the locking element (22) having an edge (15, 16) which, seen in the direction of movement, is positioned in front of an edge (15, 16) of the frame (2) in the locking position.

3. A chassis (1) according to any one of the preceding claims, **characterized in that** the chassis (1) is provided with at least one indicating element (26), by means of which it can be indicated that the slide (10) is in the locked position and that the locking element (22) is in the locking position.

4. A chassis (1) according to claim 3, **characterized in that** the chassis (1) is provided with a cover element (24) that can be moved by means of the locking element (22), which cover element (24) can move against spring force upon movement of the locking element (22) to the locking position, from a position in which it covers the indicating element (26) to a position in which it releases the indicating element (26), and vice versa.

5. A chassis (1) according to claim 4, **characterized in that** indicating elements (26) are present on either side of the frame (2), which indicating elements (26) can be simultaneously covered or released by means of cover elements (24).

6. A chassis (1) according to any one of the preceding claims, **characterized in that** the slide (10) can be moved in the locking direction when all the pins (19, 20) are in the second position.

7. A chassis (1) according to any one of the preceding claims, **characterized in that** the chassis can be detachably secured to brackets present in the vehicle by means of hooks (14).

8. An assembly comprising a chassis (1) according to any one of the preceding claims as well as a child vehicle seat, **characterized in that** the child vehicle seat is provided with elements that mate with said pins (19, 20).

## Patentansprüche

1. Rahmen (1), geeignet zum Anbringen eines Kinderautositzes auf einem Autositz, wobei der Rahmen (1) abnehmbar auf dem Autositz angebracht werden kann, während der Kinderautositz abnehmbar mit dem Rahmen (1) verbunden werden kann, wobei der Rahmen (1) ein Gestell (2), einen bezüglich des Gestells (2) unter der Kraft einer Feder (21) beweglichen Schlitten (10), sowie eine Anzahl Klinken (19, 20), die bezüglich des Schlittens (10) gegen eine Federkraft beweglich sind, wobei die Klinken (19, 20) gegen eine Federkraft aus einer ersten Position in eine zweite Position bewegt werden können, indem der Kindersitz auf den Rahmen (1) gestellt wird, wonach der Schlitten (10) unter Federkraft in Schließrichtung aus einer Ausgangslage in eine Schließlage gebracht werden kann, in der er in den Kinderautositz eingreift, umfasst, **dadurch gekennzeichnet, dass** der Schlitten (10) mit einem Rastelement (22) versehen ist, dass beweglich mit dem Schlitten (10) verbunden ist und unter Federkraft aus einer Freigabestellung, in welcher der Schlitten (10) bezüglich des Gestells (2) bewegt werden kann, in eine Schließstellung, in welcher der Schlitten (10) in seiner Schließstellung gegen eine Bewegung in eine Richtung entgegengesetzt zur Schließrichtung verriegelt ist, bewegt werden kann, und umgekehrt.

2. Rahmen (1) nach Anspruch 1, **dadurch gekennzeichnet, dass** das Rastelement (22) schwenkbar mit dem Schlitten (10) verbunden ist, wobei das Rastelement (22) eine Kante (15, 16) aufweist, welche sich in Bewegungsrichtung gesehen in der Schließstellung vor einer Kante (15, 16) des Gestells (2) befindet.

3. Rahmen (1) nach einem der vorangehenden Ansprüche, **dadurch gekennzeichnet, dass** der Rahmen (1) mit mindestens einem Anzeigeelement (26) versehen ist, mit dessen Hilfe angezeigt werden kann, dass der Schlitten (10) sich in Schließstellung befindet und dass das Rastelement (22) sich in Schließstellung befindet.

4. Rahmen (1) nach Anspruch 3, **dadurch gekennzeichnet, dass** der Rahmen (1) mit einem Abdeckelement (24) versehen ist, das mittels des Rastelements (22) bewegt werden kann, wobei sich das Abdeckelement (24) bei der Bewegung des Rastelements (22) in die Schließstellung gegen Federkraft aus einer Lage, in der es das Anzeigeelement (26) verdeckt, in eine Lage, in der es das Anzeigeelement (26) freigibt, bewegen kann, und umgekehrt.

5. Rahmen (1) nach Anspruch 4, **dadurch gekennzeichnet, dass** auf beiden Seiten des Gestells (2) Anzeigeelemente (26) vorhanden sind, die mittels Abdeckelementen (24) gleichzeitig verdeckt oder freigegeben werden können.

6. Rahmen (1) nach einem der vorangehenden Ansprüche, **dadurch gekennzeichnet**, das der Schlitten (10) in die Schließrichtung bewegt werden kann, wenn alle Klinken (19, 20) in der zweiten Position sind.

7. Rahmen (1) nach einem der vorangehenden Ansprüche, **dadurch gekennzeichnet, dass** der Rahmen mittels Haken (14) an Bügeln abnehmbar befestigt werden kann, die im Fahrzeug vorhanden sind.

8. Aufbau mit einem Rahmen (1) nach einem der vorangehenden Ansprüche sowie Kinderautositz, **dadurch gekennzeichnet, dass** der Kinderautositz mit Bauteilen versehen ist, die mit den Klinken (19, 20) zusammenpassen.

## Revendications

1. Châssis (1) approprié pour fixer un siège auto pour enfant sur un siège de véhicule, dans lequel le châssis (1) peut être fixé de manière détachable sur le siège de véhicule, alors que le siège auto pour enfant peut être raccordé de manière détachable au châssis (1), lequel châssis (1) comprend un cadre (2), une glissière (10) qui est mobile sous une force de rappel (21) par rapport au cadre (2), ainsi qu'un certain nombre de broches (19, 20) qui sont mobiles contre la force de rappel par rapport à la glissière (10), lesquelles broches (19,20) peuvent être déplacées contre la force de rappel d'une première position à une seconde position en positionnant le siège auto pour enfant sur le châssis (1), après quoi la glissière (10) peut être déplacée dans une direction de blocage sous la force de rappel d'une position de départ jusqu'à une position de blocage dans laquelle elle met en prise le siège auto pour enfant, **caractérisé en ce que** la glissière (10) est prévue avec un élément de blocage (22) qui est raccordé de manière mobile à la glissière (10), lequel élément de blocage (22) peut être déplacé sous la force de rappel d'une position débloquée, dans laquelle la glissière (10) peut être déplacée par rapport au cadre (2), jusqu'à une position de blocage dans laquelle la glissière (10), dans sa position bloquée, est bloquée contre le mouvement dans une direction opposée à la direction de blocage, et vice versa.

2. Châssis (1) selon la revendication 1, **caractérisé en ce que** l'élément de blocage (22) est raccordé de manière pivotante à la glissière (10), avec l'élément de blocage (22) qui a un bord (15, 16) qui, observé dans la direction du mouvement, est positionné en face d'un bord (15, 16) du cadre (2) dans la position de blocage.

3. Châssis (1) selon l'une quelconque des revendications précédentes, **caractérisé en ce que** le châssis (1) est prévu avec au moins un élément d'indication (26), au moyen duquel on peut indiquer que la glissière (10) est dans la position bloquée et que l'élément de blocage (22) est dans la position de blocage.

4. Châssis (1) selon la revendication 3, **caractérisé en ce que** le châssis (1) est prévu avec un élément de recouvrement (24) qui peut être déplacé au moyen de l'élément de blocage (22), lequel élément de recouvrement (24) peut être déplacé contre la force de rappel suite au mouvement de l'élément de blocage (22) dans la position de blocage, d'une position dans laquelle il recouvre l'élément d'indication (26) jusqu'à une position dans laquelle il libère l'élément d'indication (26) et vice versa.

5. Châssis (1) selon la revendication 4, **caractérisé en ce que** les éléments d'indication (26) sont présents de chaque côté du cadre (2), lesquels éléments d'indication (26) peuvent être simultanément recouverts ou libérés au moyen des éléments de recouvrement (24).

6. Châssis (1) selon l'une quelconque des revendications précédentes, **caractérisé en ce que** la glissière (10) peut être déplacée dans la direction de blocage lorsque toutes les broches (19, 20) sont dans la seconde position.

7. Châssis (1) selon l'une quelconque des revendications précédentes, **caractérisé en ce que** le châssis peut être fixé de manière détachable sur les consoles présentes dans le véhicule au moyen des crochets (14).

8. Ensemble comprenant un châssis (1) selon l'une quelconque des revendications précédentes, ainsi qu'un siège auto pour enfant, **caractérisé en ce que** le siège auto pour enfant est doté d'éléments qui se raccordent avec lesdites broches (19, 20).
